# EUROPÄISCHE PATENTANMELDUNG

(11) **EP 1 014 666 A1**
(43) Veröffentlichungstag der Anmeldung: **28.06.2000**
(21) Anmeldenummer: 99124133.2
(22) Anmeldetag: 02.12.1999
(51) Int. Cl.: H04M 3/56

(54) **Verfahren zum Realisieren von Multipunktverbindungen zwischen mehreren Endgeräten eines H.323-Datenkommunikationsnetzes**

(30) Priorität: 21.12.1998 DE 19859163
(71) Anmelder: SIEMENS AKTIENGESELLSCHAFT, 80333 München (DE)
(72) Erfinder: Klaghofer, Karl, 81373 München (DE)

(57) **Zusammenfassung**

Es werden Verfahren beschrieben zum Realisieren von Multipunktverbindungen in einem H.323-Datenkommunikationsnetzes aus einer Verbindung zwischen einem ersten Endgerät TeA und einem zweiten Endgerät TeB und einer Konsultationsverbindung zwischen diesem ersten Endgerät TeA und einem dritten Endgerät TeC. Der Multipunktverbindungsaufbau wird jeweils vom ersten Endgerät TeA durch Verbindungsaufbau zu einer Konferenzeinheit veranlaßt. Nach Aufbau von Signalisierungsverbindungen zwischen den beteiligten Endgeräten TeA, TeB, TeC und der Konferenzeinheit und nach dem Auslösen der Verbindungen zwischen den Endgeräten TeA, TeB, TeC veranlaßt die Konferenzeinheit das Öffnen von Nutzdatenkanälen zwischen den Endgeräten TeA, TeB, TeC über die Konferenzeinheit. Der Aufbau von Signalisierungsverbindungen zwischen den beteiligten Endgeräten TeA, TeB, TeC und der Konferenzeinheit wird in einer durch eine vom ersten Engerät TeA veranlaßte und in den übrigen Endgeräten TeB, TeC ausgeführte Rufumlenkung mit dem Umlenkungsziel Konferenzeinheit gesteuert.

## Beschreibung

Die Erfindung betrifft ein Verfahren zum Realisieren von Multipunktverbindungen zwischen mehreren Endgeräten eines Datenkommunikationsnetzes gemäß dem Standard ITU-T H.323, wobei zwischen einem ersten Endgerät und einem zweiten Endgerät logische Kanäle zur Nutzdatenübertragung geöffnet sind und zwischen diesem ersten Endgerät und einem dritten Endgerät logische Kanäle zur Nutzdatenübertragung einer Konsultationsverbindung geöffnet sind.

Multipunktverbindungen zwischen mehreren Teilnehmern eines Kommunikationsnetzes sind als Konferenzschaltungen bekannt, die von einer zentralen, im Kommunikationsnetz vorgesehenen Konferenzschaltungssteuerung gesteuert werden. Beispielsweise werden in einem Kommunikationsnetz enthaltene Multipunktsteuereinheiten verwendet, sogenannte Multipoint-Control-Units MCU. Bei einer Multipunktverbindung unter Verwendung solcher Multipunktsteuereinheiten haben Endgeräte jeweils eine Punkt-zu-Punkt-Verbindung zur Multipunktsteuereinheit. Diese Multipunktsteuereinheit führt eine Multipunktfunktion aus, die auch Multipoint-Processing genannt wird. Bei diesem Multipoint-Processing werden die Datenströme der einzelnen Punkt-zu-Punkt-Verbindungen behandelt, wobei die von den einzelnen Endgeräten kommenden Datenströme zusammengemischt werden und das jeweils erzeugte Gemisch zu den entsprechenden Endgeräten übertragen wird. Eine solche Vorgehensweise ist beispielsweise in dem Standard ITU-T H.323,Klausel 6.8.1, unter der Bezeichnung "Centralised conference" beschrieben.

Bevor eine zentral gesteuerte Konferenz gemäß ITU-T H.323, 6.8.1 eingeleitet wird, werden alle Teilnehmer der Konferenz vom Zeitpunkt des Konferenzbeginns benachrichtigt. Hierzu wird allen Teilnehmern der Konferenz eine bestimmte MCU-Adresse übermittelt sowie der Zeitpunkt, zu dem jeder der Teilnehmer den Aufbau einer Punkt-zu-Punkt-Verbindung unter Verwendung dieser MCU-Adresse veranlassen soll. Alternativ dazu kann die MCU eine Punkt-zu-Punkt-Verbindung zu jedem dieser Teilnehmer zum mitgeteilten Zeitpunkt veranlassen.

Es ist auch eine Multipunktkommunikation mit dezentraler Steuerung bekannt, bei der eine Multipunktsteuerung nur für das Abarbeiten einer Multipunktsignalisierung vorgesehen ist. Eine solche dezentrale Multipunktsteuerung kann beispielsweise in einem Endgerät oder einer Multipunktsteuereinheit realisiert sein. Bei einer solchen Multipunktkommunikation sendet jedes der beteiligen Endgeräte die Nutzinformation an eine von der Multipunktsteuerung vorgegebene Multicastadresse, wobei die Multipunktsteuerung mehrere unterschiedliche Multicastadressen vergibt und jedem Endgeräte eine Multicastadresse für seine zu sendende Information mitteilt. Jedes Endgerät sendet somit an eine spezielle Multicastadresse und empfängt die an die übrigen, von der Multipunktsteuerung vergebenen Multicastadressen gesandte Information. Hierzu müssen alle beteiligten Endgeräte Multicastfunktionen unterstützen. Alternativ zu der Verwendung von Multicast kann auch Multi-Unicast vorgesehen sein. Bei diesem Verfahren senden die Endgeräte die zu übertragenden Datenströme jeweils zu den übrigen an der Multipunktverbindung beteiligten Endgeräten in unter Verwendung mehrfacher Punkt-zu-Punkt-Verbindungen.

Eine solche Vorgehensweise ist beispielsweise in dem Standard ITU-T H.323, Klausel 6.8.2, unter der Bezeichnung "Decentralized conference" beschrieben. Um eine Multipunktkommunikation mit dezentraler Steuerung gemäß diesem Standard ausgehend von einem bestehenden Ruf zwischen einem ersten Teilnehmer A und einem zweiten Teilnehmer B einzurichten, müssen folgende Bedingungen erfüllt sein:
- Mindestens einer der Teilnehmer A und B muß ein Endgerät mit Multipunktsteuerung haben, oder ein zur Verfügung stehender Gatekeeper muß eine Multipunktsteuerung haben.
- Alle beteiligten Endgeräte müssen Multicastfunktionalität oder Multi-Unicastfunktionalität unterstützen.

Ein Gatekeeper ist eine logische Funktion zum Erfüllen von Standardfunktionen wie Adreßauflösung oder Bandbreitenverwaltung. Adreßauflösung bedeutet hierbei, daß ein rufender Endpunkt an den Gatekeeper eine Alias-Adresse eines zu rufenden Endpunktes sendet und vom Gatekeeper die Transportadresse, also die Internetprotokolladresse und die Port-Nummer erhält. Der Gatekeeper kennt das Verkehrsaufkommen bezüglich Echtzeitanwendungen innerhalb des Netzbereiches, für den er zuständig ist.

Darüber hinaus muß der Teilnehmer A bzw. B, der während des Bestehens eines Rufs zwischen den Teilnehmern A und B einen Konsultationsruf zu einem weiteren Teilnehmer C veranlaßt, üblicherweise bereits beim Aufbau dieses Konsultationsrufs festlegen, ob dieser zu konsultierende Teilnehmer C in den Ruf zwischen den Teilnehmern A und B mit einer Multipunktverbindung eingebunden werden soll.

Die vorstehend beschriebenen Beispiele zum Aufbauen eines zentral gesteuerten oder einen dezentral gesteuerten Multipunktverbindungsaufbaus, ermöglichen ausgehend von einem Zwei-Teilnehmer-Ruf mit Konsultationsruf keinen flexiblen Aufbau einer Drei-Teilnehmer-Konferenz.

Aufgabe der vorliegenden Erfindung ist es, ein Verfahren zum Realisieren von Multipunktverbindungen zwischen mehreren Endgeräten eines Datenkommunikationsnetzes gemäß dem Standard ITU-T H.323 anzugeben für den Fall, daß zwischen einem ersten Endgerät und einem zweiten Endgerät logische Kanäle zur Nutzdatenübertragung geöffnet sind und zwischen diesem ersten Endgerät und einem dritten Endgerät logische Kanäle zur Nutzdatenübertragung einer Konsultationsverbindung geöffnet sind.

Diese Aufgabe wird gemäß einer ersten Ausgestaltung der Erfindung gelöst durch ein Verfahren mit folgenden Schritten:
Übermitteln einer Verbindungsaufbau-Meldung einschließlich einer Anfrage zum Einrichten einer Multipunktverbindung vom ersten Endgerät an eine im Datenkommunikationsnetz vorgesehene Konferenzeinheit;
Übermitteln einer Bestätigungsmeldung einschließlich einer Kennung einer vorbereiteten Multipunktverbindung von der Konferenzeinheit zum ersten Endgerät;
Übermitteln einer Leistungsmerkmal-Meldung zur Rufumlenkung vom ersten Endgerät jeweils an das zweite und an das dritte Endgerät mit dem Rufumlenkungsziel Konferenzeinheit unter Angabe der Kennung der vorbereiteten Multipunktverbindung;
Übermitteln einer Verbindungsaufbau-Meldung unter Angabe der Kennung der vorbereiteten Multipunktverbindung jeweils vom zweiten Endgerät und dritten Endgerät an die Konferenzeinheit;
Übermitteln jeweils einer Bestätigungsmeldung auf die Verbindungsaufbau-Meldung an das zweite Endgerät und dritte Endgerät und als Reaktion hierauf;
Auslösen der zwischen den Endgeräten bestehenden Verbindungen durch das zweite und dritte Endgerät; und
Übermitteln einer Leistungsmerkmal-Meldung jeweils von der Konferenzeinheit an alle an der Multipunktverbindung zu beteiligenden Endgeräte, um das Öffnen logischer Kanäle zur Nutzdatenübertragung zwischen diesen Endgeräten über die Konferenzeinheit zu veranlassen.

Voraussetzung zum Ausführen dieser ersten Variante eines erfindungsgemäßen Verfahrens ist, daß ein eine Multipunkt-Verbindung veranlassendes Endgerät Punkt-zu-Punkt-Verbindungen zu allen übrigen für die Multipunkt-Verbindung vorgesehenen Endgeräten aufrecht erhält. Das eine Endgerät veranlaßt die übrigen Endgeräte, jeweils zu der Konferenteinheit eine Verbindung aufzubauen und nach Aufbau einer Signalisierungsverbindung zur Konferenzeinheit jeweils das Auslösen der bestehenden Punkt-zu-Punkt-Verbindung zum ersten Endgerät zu veranlassen. Hierbei teilt das eine Endgerät den übrigen Endgeräten eine zuvor von der Konferenzeinheit mitgeteilte Rufkennung mit.

Diese Rufkennung kann beispielsweise eine von der Konferenzeinheit diesem Ruf zugeordnete Adresse der Konferenzeinheit sein, die den übrigen Endgeräten als Rufumlenkungsziel angegeben wird. Das Rufumlenkungsziel kann aber auch eine dem Ruf nicht fest zugeordnete Adresse der Konferenzeinheit sein. In diesem Fall wird zusätzlich eine der aufzubauenden Multipunktverbindung von der Konferenzeinheit zugeordnete Rufkennung an die Endgeräte übermittelt und von diesen beim Verbindungsaufbau der Konferenzeinheit mitgeteilt.

Nachdem zwischen der Konferenzeinheit und den einzelnen an der Multipunktverbindung zu beteiligenden Endgeräte jeweils eine Signalisierungsverbindung aufgebaut worden ist und die zuvor bestehenden Verbindungen zwischen einzelnen Endgeräten ausgelöst worden sind, werden logische Kanäle zur Nutzdatenübertragung zwischen allen Endgeräten über die Konferenzeinheit geöffnet. Hierzu übermittelt die Konferenzeinheit eine Leistungsmerkmalmeldung an jedes dieser Endgeräte. Eine Mischeinrichtung zum Mischen der von den einzelnen Endgeräten kommenden Datenströme ist beispielsweise in der Konferenzeinheit enthalten. Eine solche Mischeinrichtung stellt vorzugsweise einem Endgerät jeweils ein Gemisch der von den anderen Endgeräten kommenden Nutzdatenströme zur Verfügung.

Eine zweite Ausgestaltung der Erfindung löst die oben genannte Aufgabe durch ein Verfahren mit folgenden Schritten:
übermitteln einer Verbindungsaufbau-Meldung einschließlich einer Anfrage zum Einrichten einer Multipunktverbindung unter Angabe von Adressen der an dieser Multipunktverbindung zu beteiligenden Endgeräte vom ersten Endgerät an eine im Datenkommunikationsnetz vorgesehene Konferenzeinheit;
Übermitteln einer Bestätigungsmeldung von der Konferenzeinheit zum ersten Endgerät;
Übermitteln jeweils einer Verbindungsaufbau-Meldung für eine Multipunktverbindung von der Konferenzeinheit an das zweite und an das dritte Endgerät;
Übermitteln einer Leistungsmerkmalmeldung zum Berichten des erfolgten Signalisierungsverbindungsaufbaus zu allen an der Multipunktverbindung zu beteiligenden Endgeräte von der Konferenzeinheit zum ersten Endgerät;
Auslösen der bestehenden Verbindungen zwischen dem ersten Endgerät und dem zweiten Endgerät sowie zwischen dem ersten Endgerät und dem dritten Endgerät, veranlaßt durch vom ersten Endgerät abgegebene Meldungen;und
Übermitteln einer Leistungsmerkmal-Meldung jeweils von der Konferenzeinheit an alle an der Multipunktverbindung zu beteiligenden Endgeräte, um das Öffnen logischer Kanäle zur Nutzdatenübertragung zwischen diesen Endgeräten über die Konferenzeinheit zu veranlassen.

Voraussetzung zum Ausführen dieser zweiten Variante eines erfindungsgemäßen Verfahrens ist ebenfalls, daß ein eine Multipunkt-Verbindung veranlassendes Endgerät Punkt-zu-Punkt-Verbindungen zu allen übrigen für die Multipunkt-Verbindung vorgesehenen Endgeräten aufrecht erhält. Das eine Endgerät veranlaßt die Konferenzeinheit, jeweils zu den übrigen Endgeräten eine Verbindung aufzubauen. Nach Aufbau einer Signalisierungsverbindung von der Konferenzeinheit zu allen für die Multipunkt-Verbindung vorgesehenen Endgeräten, veranlaßt die Konferenzeinheit das eine Endgerät, die zwischen diesem Endgerät und den übrigen Endgeräten bestehenden Verbindungen auszulösen.

Nachdem zwischen der Konferenzeinheit und den einzelnen an der Multipunktverbindung zu beteiligenden Endgeräte jeweils eine Signalisierungsverbindung aufgebaut worden ist und die zuvor bestehenden Verbindungen zwischen einzelnen Endgeräten ausgelöst worden sind, werden logische Kanäle zur Nutzdatenübertragung zwischen allen Endgeräten über die Konferenzeinheit geöffnet. Hierzu übermittelt die Konferenzeinheit eine entsprechende Leistungsmerkmalmeldung an jedes dieser Endgeräte. Eine Mischeinrichtung zum Mischen der von den einzelnen Endgeräten kommenden Datenströme ist beispielsweise in der Konferenzeinheit enthalten. Eine solche Mischeinrichtung stellt vorzugsweise einem Endgerät jeweils ein Gemisch der von den anderen Endgeräten kommenden Nutzdatenströme zur Verfügung.

Nachstehend wird die Erfindung unter Bezugnahme auf die Figuren anhand zweier Ausführungsbeispiele näher erläutert.
Figur 1 zeigt einen Meldungsflußplan zum Realisieren einer Multipunktverbindung in einem Kommunikationsnetz nach dem Standard ITU-T H.323 als ein Ausführungsbeispiel eines ersten erfindungsgemäßen Verfahrens in schematischer Darstellung
Figur 2 zeigt einen Meldungsflußplan zum Realisieren einer Multipunktverbindung in einem Kommunikationsnetz nach dem Standard ITU-T H.323 als ein Ausführungsbeispiel eines zweiten erfindungsgemäßen Verfahrens in schematischer Darstellung.

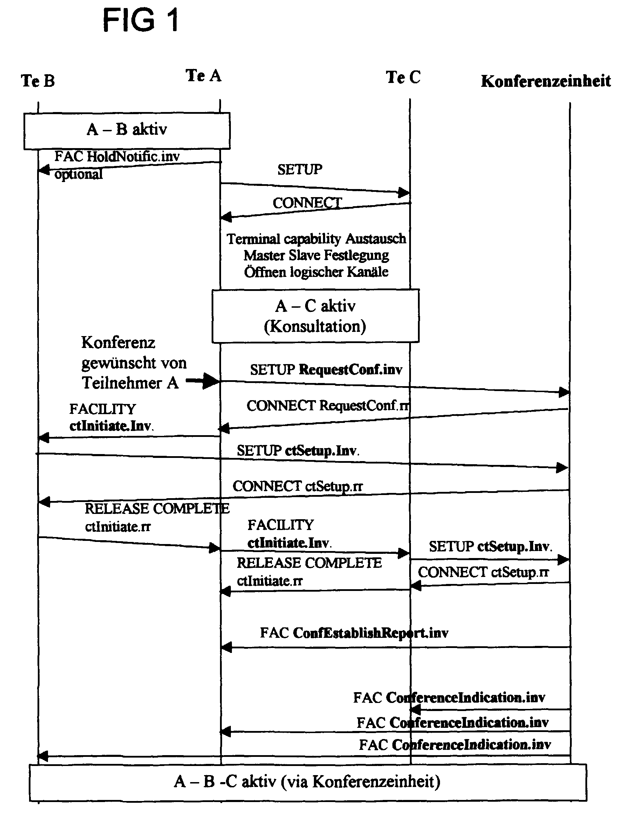

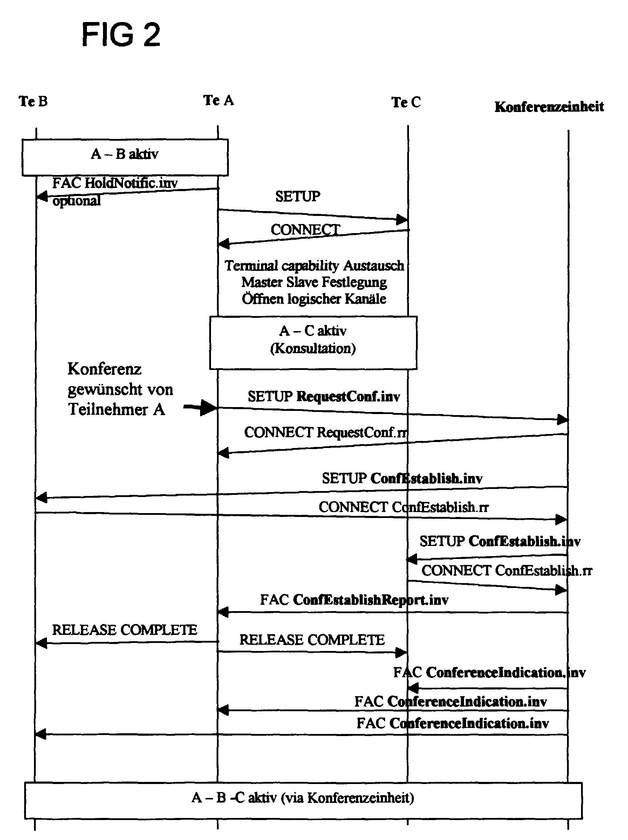

Die Figuren 1 und 2 zeigen jeweils Grundzustände, Ereignisse und den Meldungsfluß zwischen drei Endgeräten TeA, TeB und TeC eines Kommunikationsnetzes nach dem Standard ITU-T H.323 und einer in diesem Kommunikationsnetz vorgesehenen Konferenzeinheit. Die Endgeräte TeA, TeB und TeC, das Kommunikationsnetz und die Konferenzeinheit sind in den Figuren nicht körperlich dargestellt. Den Endgeräten TeA, TeB und TeC und der Konferenzeinheit sind jedoch jeweils eine vertikale Linie zugeordnet. Die Konferenzeinheit wurde hierbei in den Figuren aufgrund der besseren Verständlichkeit als solche bezeichnet.

Im Ausgangszustand besteht in beiden in den Figuren 1 und 2 dargestellten Ausführungsbeispielen zwischen einem ersten Endgerät TeA und einem zweiten Endgerät TeB eine Verbindung mit Signalisierungsverbindungen und geöffneten logischen Kanälen für Nutzdatenübertragung. Dies ist durch einen Zustandsblock A-B aktiv zwischen dem ersten Endgerät TeA und dem zweiten Endgerät TeB dargestellt. Das erste Endgerät TeA veranlaßt durch eine Leistungsmerkmalmeldung FAC HoldNotific.inv das Halten der Verbindung zwischen dem ersten und dem zweiten Endgerät TeA, TeB. Dieser Vorgang ist erfindungsgemäß nicht erforderlich und ist daher in den Figuren 1 und 2 jeweils als optional gekennzeichnet. Zwischen dem ersten Endgerät TeA und einem dritten Endgerät TeC wird durch eine Verbindungsaufbaumeldung SETUP vom ersten Endgerät TeA zum zweiten Endgerät TeB und eine Bestätigungsmeldung CONNECT vom dritten Endgerät TeC zum ersten Endgerät TeA sowie durch den Austausch von Terminal Capability-Meldungen zum Mitteilen der Möglichkeiten des jeweiligen Verbindungspartners, das Festlegen der Master-Slave-Rollenverteilung und das Öffnen logischer Kanäle eine Konsultationsverbindung eingerichtet. Diese ist in Figur 1 und in Figur 2 durch einen Zustandsblock A-C aktiv (Konsultation) zwischen dem ersten Endgerät TeA und dem dritten Endgerät TeC dargestellt.

In dem in Figur 1 dargestellten Ablauf zum Realisieren einer Multipunktverbindung und auch in dem in Figur 2 dargestellten Ablauf zum Realisieren einer Multipunktverbindung veranlaßt ein Teilnehmer A am ersten Endgerät TeA durch Übermitteln einer Verbindungsaufbau-Meldung SETUP RequestConf.inv einschließlich einer Anfrage zum Einrichten einer Multipunktverbindung an eine im Datenkommunikationsnetz vorgesehene Konferenzeinheit das Einleiten einer solchen Multipunktverbindung. Die Konferenzeinheit übermittelt in beiden dargestellten Ausführungsbeispielen eine Bestätigungsmeldung CONNECT RequestConf.rr. Durch diese Bestätigungsmeldung CONNECT RequestConf.rr wird zwischen dem ersten Endgerät TeA und der Konferenzeinheit eine Signalisierungsverbindung aufgebaut.

In dem in Figur 1 gezeigten Ausführungsbeispiel muß diese übermittelte Bestätigungsmeldung CONNECT RequestConf.rr eine Kennung einer vorbereiteten Multipunktverbindung enthalten. Veranlaßt durch die Bestätigungsmeldung CONNECT RequestConf.rr
übermittelt das erste Endgerät TeA eine Leistungsmerkmal-Meldung FACILITY ctInitiate.Inv jeweils an das zweite und an das dritte Endgerät TeB, TeC mit dem Rufumlenkungsziel Konferenzeinheit unter Angabe der Kennung der vorbereiteten Multipunktverbindung.

Vom zweiten Endgerät TeB und dritten Endgerät TeC wird jeweils eine Verbindungsaufbau-Meldung SETUP ctSetup.Inv unter Angabe der Kennung der vorbereiteten Multipunktverbindung an die Konferenzeinheit übermittelt. Diese Verbindungsaufbau-Meldung SETUP ctSetup.Inv dient aus der Sicht des zweiten Endgeräts TeB bzw. des dritten Endgeräts TeC zum Einleiten einer Rufumlenkung vom ersten Endgerät TeA zur Konferenzeinheit.

Die Konferenzeinheit übermittelt jeweils eine Bestätigungsmeldung CONNECT ctSetup.rr auf die Verbindungsaufbau-Meldung SETUP ctSetup.Inv an das zweite Endgerät TeB und das dritte Endgerät TeC. Als Reaktion hierauf veranlassen das zweite und dritte Endgerät TeB, TeC jeweils durch eine Auslösemeldung RELEASE COMPLETE ctInitiate.rr das Auslösen der zwischen den Endgeräten TeA, TeB, TeC bestehenden Verbindungen.

Die Konferenzeinheit übermittelt jeweils eine Leistungsmerkmal-Meldung FAC ConferenceIndication.inv an alle an der Multipunktverbindung zu beteiligenden Endgeräte TeA, TeB, TeC, um das Öffnen logischer Kanäle zur Nutzdatenübertragung zwischen diesen Endgeräten TeA, TeB, TeC über die Konferenzeinheit zu veranlassen. In Figur 1 ist als Resultat hiervon ein Zustandsblock zwischen den Endgeräten TeA, TeB und TeC sowie der Konferenzeinheit dargestellt mit der Bezeichnung A-B-C aktiv (via Konferenzeinheit).

In dem in Figur 2 gezeigten Ausführungsbeispiel muß, im Gegensatz zu dem in Figur 1 gezeigten Ausführungsbeispiel, die von der Konferenzeinheit an das erste Endgerät TeA übermittelte Bestätigungsmeldung CONNECT RequestConf.rr nicht unbedingt eine Kennung einer vorbereiteten Multipunktverbindung enthalten. Außerdem werden in diesem in Figur 2 dargestellten Ausführungsbeispiel eines zweiten erfindungsgemäßen Verfahrens nicht das erste Endgerät TeA und in Folge hiervon die übrigen Endgeräte TeB und TeC durch die Bestätigungsmeldung CONNECT RequestConf.rr veranlaßt, die Steuerung des Signalisierungsverbindungsaufbaus der Multipunktverbindung zu übernehmen.

Dafür muß die vom ersten Endgerät TeA an die im Datenkommunikationsnetz vorgesehene Konferenzeinheit mit der Anfrage zum Einrichten einer Multipunktverbindung übermittelte Verbindungsaufbau-Meldung SETUP RequestConf.inv Adressen der an der Multipunktverbindung zu beteiligenden Endgeräte TeA, TeB, TeC enthalten.

Neben einer Bestätigungsmeldung CONNECT RequestConf.rr zum ersten Endgerät TeA übermittelt die Konferenzeinheit jeweils eine Verbindungsaufbau-Meldung SETUP ConfEstablish.inv für eine Multipunktverbindung an das zweite und an das dritte Endgerät TeB, TeC.

Daraufhin bestätigen das zweite und das dritte Endgerät TeB, TeC diese Verbindungsaufbaumeldungen jeweils durch eine Bestätigungsmeldung CONNECT ConfEstablish.rr an die Konferenzeinheit. Durch die genannten Bestätigungsmeldungen CONNECT RequestConf.rr von der Konferenzeinheit zum ersten Endgerät TeA und CONNECT ConfEstablish.rr vom zweiten und dritten Endgerät TeB, TeC zur Konferenzeinheit ist zwischen der Konferenzeinheit und jedem der an der Multipunktverbindung zu beteiligenden Endgeräte TeA, TeB und TeC eine Signalisierungsverbindung eingerichtet.

Um dieses anzuzeigen, berichtet die Konferenzeinheit mit einer Leistungsmerkmalmeldung FAC ConfEstablishReport.inv an das erste Endgerät TeA. Die Leistungsmerkmalmeldung FAC ConfEstablishReport.inv veranlaßt das erste Endgerät TeA, die bestehenden Verbindungen zwischen dem ersten Endgerät TeA und dem zweiten Endgerät TeB sowie zwischen dem ersten Endgerät TeA und dem dritten Endgerät TeC mit Hilfe von Meldungen RELEASE COMPLETE an das zweite und dritte Endgerät TaB und TeC auszulösen.

Die Konferenzeinheit übermittelt jeweils eine Leistungsmerkmal-Meldung FAC ConferenceIndication.inv an alle an der Multipunktverbindung zu beteiligenden Endgeräte TeA, TeB, TeC, um das Öffnen logischer Kanäle zur Nutzdatenübertragung zwischen diesen Endgeräten TeA, TeB, TeC über die Konferenzeinheit zu veranlassen. In Figur 2 ist als Resultat hiervon ein Zustandsblock zwischen den Endgeräten TeA, TeB und TeC sowie der Konferenzeinheit dargestellt mit der Bezeichnung A-B-C aktiv (via Konferenzeinheit).

Zur Realisierung eines Verfahrensablaufs nach Figur 1 und auch zur Realisierung eines Verfahrensablaufs nach Figur 2 braucht nur das erste, die Multipunktverbindung veranlassende Endgerät eine spezielle Steuerung zu haben. Die übrigen Endgeräte können bekannte Standardendgeräte eines Datenkommunikationsnetzes gemäß dem Standard ITU-T H.323 sein.

## Patentansprüche

1. Verfahren zum Realisieren von Multipunktverbindungen zwischen mehreren Endgeräten (TeA, TeB, TeC) eines Datenkommunikationsnetzes gemäß dem Standard ITU-T H.323, wobei zwischen einem ersten Endgerät (TeA) und einem zweiten Endgerät (TeB) logische Kanäle zur Nutzdatenübertragung geöffnet sind und zwischen diesem ersten Endgerät (TeA) und einem dritten Endgerät (TeC) logische Kanäle zur Nutzdatenübertragung einer Konsultationsverbindung geöffnet sind,
gekennzeichnet durch folgende Schritte:
Übermitteln einer Verbindungsaufbau-Meldung (SETUP RequestConf.inv) einschließlich einer Anfrage zum Einrichten einer Multipunktverbindung vom ersten Endgerät (TeA) an eine im Datenkommunikationsnetz vorgesehene Konferenzeinheit (Konferenzeinheit);
Übermitteln einer Bestätigungsmeldung (CONNECT RequestConf.rr) einschließlich einer Kennung einer vorbereiteten Multipunktverbindung von der Konferenzeinheit (Konferenzeinheit) zum ersten Endgerät (TeA);
Übermitteln einer Leistungsmerkmal-Meldung zur Rufumlenkung (FACILITY ctInitiate.Inv) vom ersten Endgerät (TeA) jeweils an das zweite und an das dritte Endgerät (TeB, TeC) mit dem Rufumlenkungsziel Konferenzeinheit (Konferenzeinheit) unter Angabe der Kennung der vorbereiteten Multipunktverbindung;
Übermitteln einer Verbindungsaufbau-Meldung (SETUP ctSetup.Inv) unter Angabe der Kennung der vorbereiteten Multipunktverbindung jeweils vom zweiten Endgerät (TeB) und dritten Endgerät (TeC) an die Konferenzeinheit (Konferenzeinheit);
Übermitteln jeweils einer Bestätigungsmeldung (CONNECT ctSetup.rr) auf die Verbindungsaufbau-Meldung an das zweite Endgerät (TeB) und dritte Endgerät (TeC) und als Reaktion hierauf;
Auslösen (RELEASE COMPLETE ctInitiate.rr) der zwischen den Endgeräten (TeA, TeB, TeC) bestehenden Verbindungen durch das zweite und dritte Endgerät (TeB, TeC); und
Übermitteln einer Leistungsmerkmal-Meldung (FAC ConferenceIndication.inv) jeweils von der Konferenzeinheit (Konferenzeinheit) an alle an der Multipunktverbindung zu beteiligenden Endgeräte (TeA, TeB, TeC), um das Öffnen logischer Kanäle zur Nutzdatenübertragung zwischen diesen Endgeräten (TeA, TeB, TeC) über die Konferenzeinheit (Konferenzeinheit) zu veranlassen.

2. Verfahren zum Realisieren von Multipunktverbindungen zwischen mehreren Endgeräten (TeA, TeB, TeC) eines Datenkommunikationsnetzes gemäß dem Standard ITU-T H.323, wobei zwischen einem ersten Endgerät (TeA) und einem zweiten Endgerät (TeB) logische Kanäle zur Nutzdatenübertragung geöffnet sind und zwischen diesem ersten Endgerät (TeA) und einem dritten Endgerät (TeC) logische Kanäle zur Nutzdatenübertragung einer Konsultationsverbindung geöffnet sind,
gekennzeichnet durch folgende Schritte:
Übermitteln einer Verbindungsaufbau-Meldung (SETUP RequestConf.inv) einschließlich einer Anfrage zum Einrichten einer Multipunktverbindung unter Angabe von Adressen der an dieser Multipunktverbindung zu beteiligenden Endgeräte (TeA, TeB, TeC) vom ersten Endgerät (TeA) an eine im Datenkommunikationsnetz vorgesehene Konferenzeinheit (Konferenzeinheit); Übermitteln einer Bestätigungsmeldung (CONNECT RequestConf.rr) von der Konferenzeinheit (Konferenzeinheit) zum ersten Endgerät (TeA);
Übermitteln jeweils einer Verbindungsaufbau-Meldung (SETUP ConfEstablish.inv) für eine Multipunktverbindung von der Konferenzeinheit (Konferenzeinheit) an das zweite und an das dritte Endgerät (TeB, TeC);
Übermitteln einer Leistungsmerkmalmeldung (FAC ConfEstablishReport.inv) zum Berichten des erfolgten Signalisierungsverbindungsaufbaus zu allen an der Multipunktverbindung zu beteiligenden Endgeräte (TeA, TeB, TeC) von der Konferenzeinheit (Konferenzeinheit) zum ersten Endgerät (TeA);
Auslösen der bestehenden Verbindungen zwischen dem ersten Endgerät (TeA) und dem zweiten Endgerät (TeB) sowie zwischen dem ersten Endgerät (TeA) und dem dritten Endgerät (TeC), veranlaßt durch vom ersten Endgerät (TeA) abgegebene Meldungen (RELEASE COMPLETE); und
Übermitteln einer Leistungsmerkmal-Meldung (FAC ConferenceIndication.inv) jeweils von der Konferenzeinheit (Konferenzeinheit) an alle an der Multipunktverbindung zu beteiligenden Endgeräte (TeA, TeB, TeC), um das Öffnen logischer Kanäle zur Nutzdatenübertragung zwischen diesen Endgeräten (TeA, TeB, TeC) über die Konferenzeinheit (Konferenzeinheit) zu veranlassen.
